# EUROPÄISCHE PATENTANMELDUNG

(11) **EP 4 570 634 A1**
(43) Veröffentlichungstag der Anmeldung: **18.06.2025**
(21) Anmeldenummer: 23216685.0
(22) Anmeldetag: 14.12.2023
(51) Int. Cl.: B62J 11/19, B62J 15/00, B62K 3/00

(54) **SPRITZSCHUTZ ZUR TEILWEISEN ABDECKUNG EINES EINE DREHBARE KOMPONENTE UMGEBENDEN NASSBEREICHS**

(71) Anmelder: Technische Universität Graz, 8010 Graz (AT)
(72) Erfinder: Schnöll, Hans Peter, 8020 Graz (AT)
(74) Vertreter: Hübscher & Partner Patentanwälte GmbH

(57) **Zusammenfassung**

Es werden ein Spritzschutz zur teilweisen Abdeckung eines eine drehbare Komponente (1) umgebenden Nassbereichs (2), sowie ein Fahrrad (19) mit einem derartigen Spritzschutz, beschrieben. Um bei kompakter Bauweise und einfachen Fertigungsbedingungen einen verbesserten Schutz sowohl des Radfahrers als auch des Fahrrads vor Schmutz und Feuchtigkeit der Fahrbahn zu bieten, wird vorgeschlagen, dass der Spritzschutz ein Schutzprofil (3) umfasst, das zwei sich in Profillängsrichtung erstreckende und gegenüber dem Nassbereich (2) geschlossene Strömungskanäle (4, 5) ausbildet, zwischen denen eine Einströmöffnung (6) vorgesehen ist, in deren Bereich ein Strömungsteiler (7) zum Aufteilen einer Flüssigkeit aus dem Nassbereich (2) in die beiden Strömungskanäle (4, 5) angeordnet ist.

## Beschreibung

Die Erfindung bezieht sich auf einen Spritzschutz zur teilweisen Abdeckung eines eine drehbare Komponente, insbesondere ein Laufrad, umgebenden Nassbereichs. Die Erfindung bezieht sich darüber hinaus auch auf ein Fahrrad mit einem Spritzschutz.

Ein bei Laufrädern als drehbare Komponente eingesetzter Spritzschutz, der in diesem Zusammenhang in der Regel als Kotflügel oder Schutzblech bezeichnet wird, ist beispielsweise aus der DE10235674A1, der EP3854666A1, oder der DE102010055321A1 bekannt. Ein solcher Spritzschutz dient typischerweise dazu, den Radfahrer vor auf einer nassen Fahrbahn befindlichem Spritzwasser zu schützen, welches sich fliehkraftbedingt von der Lauffläche des rotierenden Laufrades tangential in Richtung eines sich zwischen dem Spritzschutz und dem Laufrad bildenden Nassbereiches ablöst.

Ein derartiger Spritzschutz gemäß dem Stand der Technik birgt allerdings den Nachteil, dass das Spritzwasser oftmals nur unzureichend abgeleitet wird bzw. direkt vom Spritzschutz auf das Fahrrad, den Fahrer / die Fahrerin oder zurück auf die Lauffläche tropft, sodass das Spritzwasser in weiterer Folge auf empfindliche Antriebskomponenten oder letztlich auch auf den Radfahrer trifft. Dies ist insbesondere bei solchen Witterungsbedingungen problematisch, wo zusätzlich mit dem Wasser Schmutz von der nassen Fahrbahn aufgenommen wird und dadurch die Gefahr einer Beschädigung des Fahrrades zufolge der abrasiven Wirkung des Schmutzanteils des Wassers einhergeht.

Es besteht somit ein Bedarf an einem Spritzschutz der eingangs geschilderten Art, der bei kompakter Bauweise und einfachen Fertigungsbedingungen einen verbesserten Schutz sowohl des Radfahrers als auch des Fahrrads vor Schmutz und Feuchtigkeit der Fahrbahn bietet.

Die Erfindung löst die gestellte Aufgabe durch ein Schutzprofil, das zwei sich in Profillängsrichtung erstreckende und gegenüber dem Nassbereich geschlossene Strömungskanäle ausbildet, zwischen denen eine Einströmöffnung vorgesehen ist, in deren Bereich ein Strömungsteiler zum Aufteilen einer Flüssigkeit aus dem Nassbereich in die beiden Strömungskanäle angeordnet ist.

Zufolge dieser Merkmale trifft etwaiges, sich tangential von der drehbaren Komponente in Richtung des Nassbereiches ablösendes Spritz- bzw. Schmutzwasser auf den Strömungsteiler und wird somit in zwei Teilströme unterteilt, wobei jeder Teilstrom über die Einströmöffnung in je einen Strömungskanal einfließt. Vorzugsweise ist der Strömungsteiler in der Profilmitte angeordnet, da sich das Spritz- und Schmutzwasser in der Regel mittig von der Oberfläche der drehbaren Komponente ablöst. Insbesondere verläuft der Strömungsteiler in einer Mittelebene, bezüglich der das Schutzprofil symmetrisch ausgebildet ist. Die Einströmöffnung kann vorzugsweise zwei Einströmbereiche ausbilden, die jeweils einem Strömungskanal zugeordnet sind. Insbesondere kann sich die Einströmöffnung in Profillängsrichtung erstrecken, wobei die Einströmbereiche entsprechende Einströmspalte ausbilden. Der Strömungsteiler ist insbesondere als ein dem Nassbereich zugewandter, in Profillängsrichtung zwischen den Strömungskanälen verlaufender Strömungsleitkamm ausgebildet. Die sich erfindungsgemäß durch den Strömungsteiler einstellenden Strömungsverhältnisse schaffen die Voraussetzung, dass ein Einfließen des jeweiligen Teilstromes in den Strömungskanal quer zur Profillängsrichtung entlang der Kanalinnenwand hin zu einem vom Querschnitt des Strömungskanals aus betrachteten Sammelbereich begünstigt wird, wobei in weiterer Folge je nach geometrischer Ausgestaltung der Strömungskanäle ein Abbau der kinetischen Energie des Spritzwassers gefördert wird. Somit wird die Gefahr reduziert, dass das Spritzwasser aus dem Strömungskanal zurück in den Nassbereich fließt. Das im Strömungskanal befindliche Wasser wird somit problemlos in Profillängsrichtung entlang des Strömungskanals abgeleitet.

Ein erfindungsgemäßer Spritzschutz kann grundsätzlich zur teilweisen Abdeckung jedweder um eine Rotationsachse drehbaren Komponente zum Einsatz kommen. Ein bevorzugter Einsatzzweck ist im Zusammenhang mit Fahrrädern zu sehen, wobei die Laufräder die drehbaren Komponenten bilden. Demgemäß bezieht sich die Erfindung auch auf ein Fahrrad mit einem erfindungsgemäßen Spritzschutz. Grundsätzlich kann das Schutzprofil in Profillängsrichtung im Wesentlichen geradlinig, aber auch z.B. bogenförmig verlaufen. Im Falle von bogenförmig verlaufenden Schutzprofilen entspricht die Profillängsrichtung im Wesentlichen der Bogenumfangsrichtung.

Konstruktiv günstige Bedingungen ergeben sich, wenn das Schutzprofil bezüglich seiner Profilbreite zwei einander gegenüberliegende freie Profilflanken aufweist, die sich unter Ausbildung der Strömungskanäle und der darin einmündenden Einströmöffnung zum in der Profilmitte angeordneten Strömungsteiler erstrecken. Unter einer freien Profilflanke wird im Sinne der Erfindung eine Profilflanke mit einem freien Ende verstanden, welches sich zum in der Profilmitte angeordneten Strömungsteiler so erstreckt, dass aus dem Nassbereich problemlos Spritz- bzw. Schmutzwasser über die Einströmöffnung in die Strömungskanäle einfließen kann. Das Schutzprofil kann beispielsweise modular aufgebaut, oder aber auch einstückig ausgebildet sein. Dabei können die jeweiligen Profilflanken zum in der Profilmitte angeordneten Strömungsteiler unter Ausbildung der Strömungskanäle eingebogen sein. Grundsätzlich kann vorgesehen sein, dass der jeweilige Strömungskanal sich im Querschnitt von der Einströmöffnung zu einem der Einströmöffnung gegenüberliegenden Sammelbereich hin verjüngt. In diesem Zusammenhang ergeben sich vorteilhafte Fertigungsbedingungen, wenn eine jeweilige Profilflanke unter Ausbildung des Sammelbereiches eingebogen ist. Ein weiterer Vorteil liegt darin, dass mit der sich dabei ergebenden Querschnittskontur der Profilflanke auch eine gewisse Aussteifung des Schutzprofils einhergeht, was wiederum zu einer erhöhten Stabilität des Spritzschutzes führt.

Damit die Gefahr eines Rückfließens des Wassers aus einem Strömungskanal in den Nassbereich weiter reduziert werden kann, wird vorgeschlagen, dass das freie Ende der jeweiligen Profilflanke im Bereich der Einströmöffnung vom Strömungsteiler weg zum jeweiligen Strömungskanal hin ausgebogen ist. Bei entsprechender Ausgestaltung reduziert sich somit der Fließquerschnitt der Einströmöffnung bzw. der entsprechenden Einströmbereiche vom Nassbereich in Richtung Strömungskanal. Folglich wird ein Einströmen einer Flüssigkeit aus dem Nassbereich über die Einströmöffnung in den Strömungskanal begünstigt, wohingegen ein Ausfließen der Flüssigkeit aus dem Strömungskanal zurück in den Nassbereich weiter erschwert wird.

Grundsätzlich muss bei einem Spritzschutz, insbesondere wenn dieser im Zusammenhang mit Rädern bzw. Laufrädern als drehbare Komponenten zum Einsatz kommt, darauf geachtet werden, dass sich im montierten Zustand ein im Querschnitt ausreichend großer Nassbereich bzw. ein ausreichender Abstand zwischen Schutzprofil und der drehbaren Komponente ergibt, sodass das Schutzprofil keinen zusätzlichen Widerstand erzeugt bzw. sich keine unerwünschte Geräuschentwicklung einstellt. Vor diesem Hintergrund ergeben sich vorteilhafte Einström- und Sammelbedingungen in Bezug auf die Flüssigkeit einerseits, sowie zuverlässige Betriebsbedingungen andererseits, wenn das freie Ende der jeweiligen Profilflanke einen bezogen auf den durch die Profilflanke gebildeten Strömungskanal im Querschnitt konkaven Flankenabschnitt aufweist, an den in Richtung Profilmitte ein bezogen auf diesen Strömungskanal im Querschnitt konvexer Flankenabschnitt anschließt. Dadurch ergibt sich auf konstruktiv günstige Weise eine vom Nassbereich zum Sammelkanal hin ausgebauchte Querschnittskontur des sich zur Profilmitte erstreckenden Flankenabschnitts. Dies bietet den Vorteil, dass ein Einfließen der Flüssigkeit vom Nassbereich über die Einströmöffnung in die jeweiligen Sammelkanäle nicht durch die Profilflanken erschwert wird, wobei umgekehrt die sich ergebende, im Wesentlichen S-förmige Querschnittskontur des jeweiligen Flankenabschnitts ein Ansammeln von Flüssigkeit im Sammelbereich begünstigt sowie ein Rückfließen in den Nassbereich weitgehend reduziert.

Eine einfache Integration allfälliger Leitungen, die beispielsweise mit einer Leuchteinrichtung verbunden sind, kann dadurch erreicht werden, dass der Strömungsteiler einen Hohlquerschnitt unter Ausbildung einer in Profillängsrichtung verlaufenden Kabeldurchführung aufweist.

Damit die vom Spritzschutz aufgesammelte Flüssigkeit auf zuverlässige Weise vom Spritzschutz zurück auf die Fahrbahn gelangen kann, und dabei das Risiko einer Sekundärverschmutzung des Radfahrers bzw. des Fahrrads reduziert wird, empfiehlt es sich, dass der jeweilige Strömungskanal in Profillängsrichtung an wenigstens einem Profilendabschnitt in eine Wasserableiteinrichtung mündet. Die Wasserableitungseinrichtung kann dabei im einfachsten Fall ähnlich einer Düse ausgebildet sein. Darüber hinaus kann die Wasserableiteinrichtung aber grundsätzlich auch als Diffusor bzw. als Krümmer oder Verteiler ausgestaltet sein. Beispielsweise können die Strömungskanäle in ein gemeinsames Ableitrohr münden. Es kann aber auch jedem Strömungskanal ein Ableitrohr zugeordnet sein, wobei jedes der Ableitrohre das Wasser seitlich vorbei am entsprechenden Reifen bzw. quer zur Profillängsrichtung ableitet. Es kann grundsätzlich auch vorgesehen sein, dass die Strömungskanäle eines Profilendabschnitts über eine Durchflussleitung, die z.B. als Montagestrebe ausgebildet sein kann, mit dem in Profillängsrichtung gegenüberliegenden Profilendabschnitt strömungsverbunden sind und in den dortigen Strömungskanalbereich einmünden. Dadurch wird die Flüssigkeit nur an einem Profilendabschnitt abgeleitet.

Je nachdem, an welchen Profilendabschnitten eine Wasserableiteinrichtung vorgesehen ist, können unterschiedliche Ausgestaltungen zweckdienlich sein. Wasserableiteinrichtungen, die vorderradseitig am bezüglich der Fahrtrichtung vorderen Profilende angeordnet sind, können vorzugsweise so ausgestaltet sein, dass die über die Strömungskanäle abfließende Flüssigkeit gezielt auf den Reifen in einen Bereich abgeleitet wird, wo sich die Fliehkraft und der Schwerkraft in ihrer Richtung annähern, sodass sich die Flüssigkeit nicht mehr erneut von der Lauffläche ablöst, sondern in Richtung Fahrbahn vom Reifen mitgenommen wird. Bei Wasserableiteinrichtungen, die hinterradseitig am bezüglich der Fahrtrichtung vorderen Profilende angeordnet sind, kann eine Ausgestaltung vorgesehen sein, sodass die Flüssigkeit seitlich am Reifen vorbei geleitet wird. Demgegenüber können Wasserableiteinrichtungen, die sowohl vorder- als auch hinterradseitig am bezüglich der Fahrtrichtung hinteren Profilende angeordnet sind, insbesondere dergestalt sein, dass die Flüssigkeit auf die Fahrbahn geleitet wird. Vorzugsweise wird die Flüssigkeit dabei unter Ausbildung einer Art Flüssigkeitsvorhang quer, insbesondere normal zur Fahrbahnoberfläche auf diese geleitet, sodass der Flüssigkeitsvorhang eine Barriere für das sich im Bereich zwischen Reifenauflagestelle und hinterem Profilende tangential von der Reifenoberfläche ablösende Spritz- bzw. Schmutzwasser bildet, welches somit unterhalb der Wasserableiteinrichtung durchgeht. Dadurch ist insbesondere bei Gruppentrainingsfahrten der jeweils nachfolgende Radfahrer zuverlässig vor Spritz- und Schmutzwasser des unmittelbar vorderen Radfahrers geschützt. Um im Falle einer Kollision die Gefahr einer Beschädigung der Wasserableiteinrichtung zu verringern, kann auch vorgesehen sein, dass zumindest die Wasserableiteinrichtung aus einem entsprechend elastischen Material gefertigt ist.

Obwohl insbesondere ein in Profillängsrichtung bogenförmig verlaufendes Schutzprofil grundsätzlich einen Bogenwinkel unter 180° umspannen kann, empfiehlt es sich für eine noch bessere Schutzwirkung , wenn das in Profillängsrichtung bogenförmig verlaufende Schutzprofil einen Bogenwinkel über 180°, vorzugsweise zwischen 180° und 320° umspannt.

In der Zeichnung ist der Erfindungsgegenstand beispielsweise dargestellt. Es zeigen
- Fig. 1: eine schematische Schnittansicht eines Schutzprofiles und eines Fahrradreifens als drehbare Komponente,
- Fig. 2: einen schematischen Schrägriss eines abgeschnittenen Profilendabschnittes in einem größeren Maßstab,
- Fig. 3: eine schematische Seitenansicht eines vorderen Laufrades mit einem erfindungsgemäßen Spritzschutz in einer ersten Ausführungsform in einem kleineren Maßstab, und
- Fig. 4: eine schematische Seitenansicht eines hinteren Laufrades mit einem erfindungsgemäßen Spritzschutz in einer weiteren Ausführungsform.

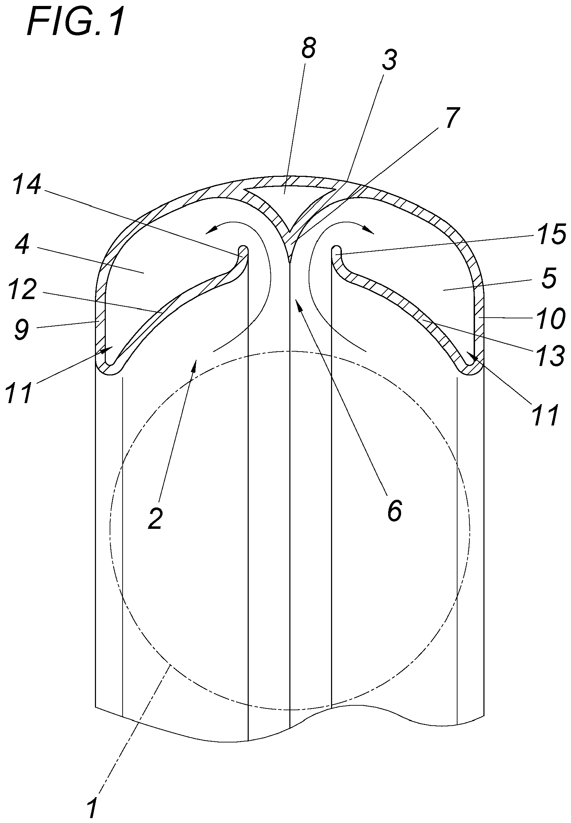

Ein erfindungsgemäßer Spritzschutz zur teilweisen Abdeckung eines eine drehbare Komponente 1 umgebenden Nassbereichs 2 umfasst ein Schutzprofil 3, das zwei sich in Profillängsrichtung erstreckende und gegenüber dem Nassbereich 2 geschlossene Strömungskanäle 4, 5 ausbildet. Im vorliegenden Ausführungsbeispiel handelt es sich bei der drehbaren Komponente 1 um einen Fahrradreifen, wobei dieser aus Gründen der Übersicht in Fig.1 lediglich schematisch durch einen den Querschnitt des Fahrradreifens repräsentierenden strichpunktierten Kreis angedeutet wird.

Zwischen den Strömungskanälen 4, 5 ist eine Einströmöffnung 6 vorgesehen, die einen als Strömungsleitkamm ausgebildeten Strömungsteiler 7 zum Aufteilen einer Flüssigkeit aus dem Nassbereich 2 in die beiden Strömungskanäle 4, 5 aufweist. Der Strömungsteiler 7 weist außerdem einen Hohlquerschnitt unter Ausbildung einer in Profillängsrichtung verlaufenden Kabeldurchführung 8 auf. Der Strömungsteiler 7 verläuft in einer Mittelebene, bezüglich der das Schutzprofil 3 symmetrisch ausgebildet ist.

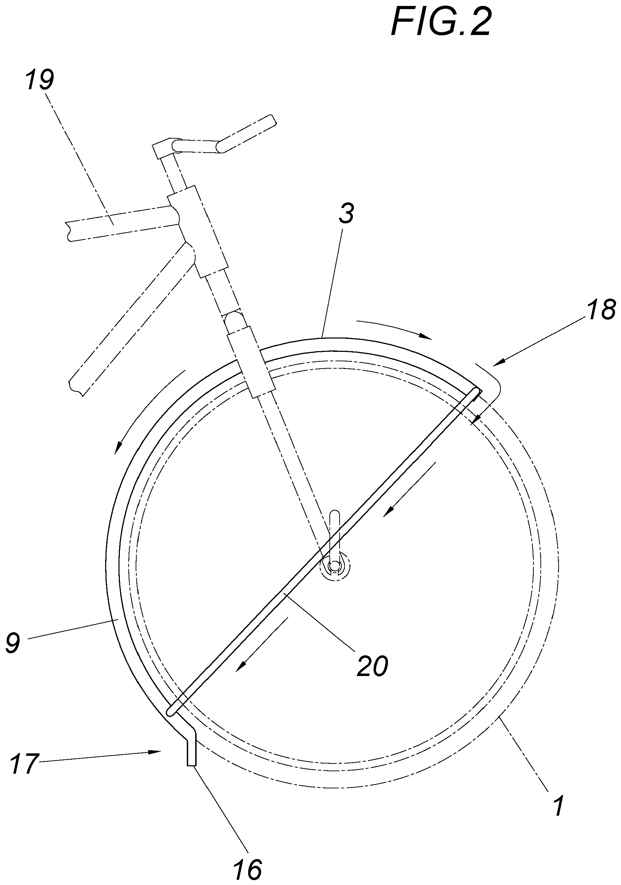

Die Strömungskanäle 4, 5 und die Einströmöffnung 6 werden dadurch gebildet, dass das vorzugsweise einstückige Schutzprofil 3 bezüglich seiner Profilbreite zwei einander gegenüberliegende freie Profilflanken 9, 10 aufweist, die sich zum in der Profilmitte angeordneten Strömungsteiler 7 erstrecken. Der jeweilige Strömungskanal 4, 5 verjüngt sich im Querschnitt von der Einströmöffnung 6 hin zu einem dieser gegenüberliegenden Sammelbereich 11. Wie dies in den Fig. 1 und 2 gezeigt wird, kann hierzu die jeweilige Profilflanke 9, 10 unter Ausbildung des Sammelbereiches 11 gebogen sein. Darüber hinaus weist das freie Ende der jeweiligen Profilflanke 9, 10 einen bezogen auf den durch die Profilflanke 9, 10 gebildeten Strömungskanal 4, 5 im Querschnitt konkaven Flankenabschnitt 12, 13 auf, an den in Richtung Profilmitte ein bezogen auf diesen Strömungskanal 4, 5 im Querschnitt konvexer Flankenabschnitt 14, 15 anschließt. Der konvexe Flankenabschnitt 14, 15 ist demnach im Bereich der Einströmöffnung 6 vom Strömungsteiler 7 weg zum jeweiligen Strömungskanal 4, 5 hin ausgebogen.

Der erfindungsgemäße Spritzschutz ermöglicht ob seiner Ausgestaltung einerseits ein zuverlässiges und möglichst spritzminimiertes Einfließen von Flüssigkeit über die Einströmöffnung 6 in die Sammelkanäle 4, 5 sowie ein Ableiten der Flüssigkeit in Profillängsrichtung, und verhindert andererseits weitgehend ein unerwünschtes Rückfließen in den Nassbereich 2.

Fig. 2 zeigt einen Spritzschutz für das vordere Laufrad eines Fahrrades 19. Wie dies schematisch angedeutet wird, können die Strömungskanäle 4, 5 eines Profilendabschnittes 18 über eine als Montagestrebe ausgebildete Durchflussleitung 20 mit dem in Profillängsrichtung gegenüberliegenden Profilendabschnitt 17 strömungsverbunden sein und in den dortigen Strömungskanalbereich, sowie letztlich in eine Wasserableiteinrichtung 16 einmünden.

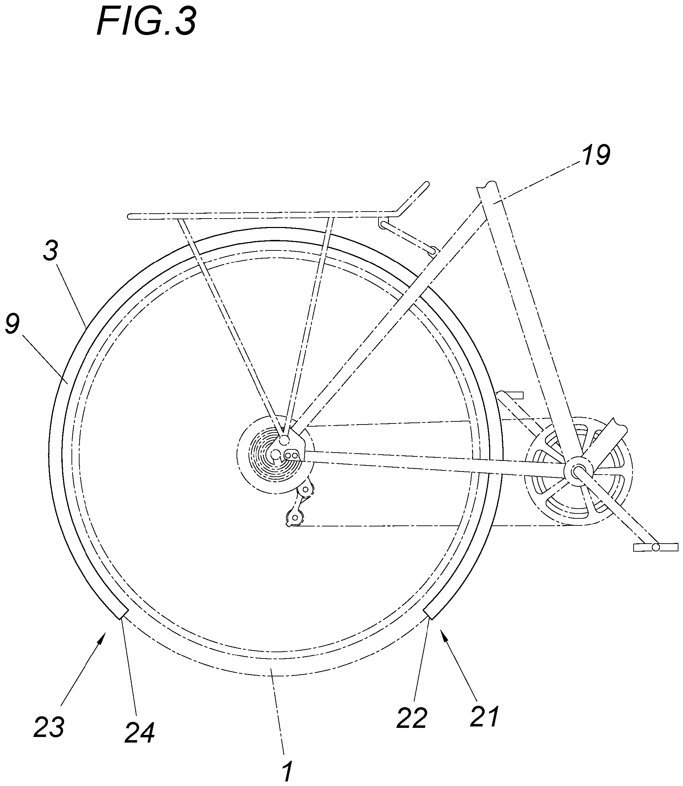

In Fig. 3 wird ein Spritzschutz für das hintere Laufrad des Fahrrads 19 dargestellt, wobei das in Profillängsrichtung bogenförmig verlaufende Schutzprofil 3 einen Bogenwinkel von ca. 270° umspannt. Am vorderen Profilendabschnitt 21 kann eine Wasserableiteinrichtung 22 und am hinteren Profilendabschnitt 23 eine Wasserableiteinrichtung 24 vorgesehen sein.

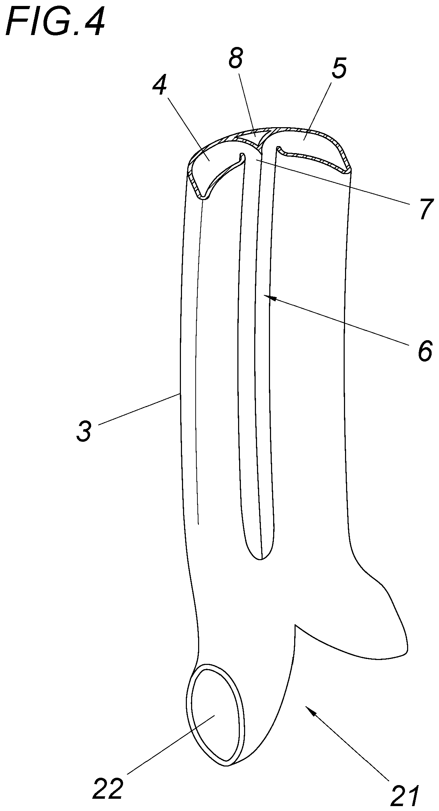

Fig. 4 veranschaulicht eine mögliche Ausgestaltung einer Wasserableiteinrichtung 22, in die der jeweilige Strömungskanal 4, 5 in Profillängsrichtung am Profilendabschnitt 21 mündet. Wie dies ebenfalls aus Fig. 4 hervorgeht, erstreckt sich die Einströmöffnung 6 in Profillängsrichtung.

## Patentansprüche

1. Spritzschutz zur teilweisen Abdeckung eines eine drehbare Komponente (1) umgebenden Nassbereichs (2), **gekennzeichnet durch** ein Schutzprofil (3), das zwei sich in Profillängsrichtung erstreckende und gegenüber dem Nassbereich (2) geschlossene Strömungskanäle (4, 5) ausbildet, zwischen denen eine Einströmöffnung (6) vorgesehen ist, in deren Bereich ein Strömungsteiler (7) zum Aufteilen einer Flüssigkeit aus dem Nassbereich (2) in die beiden Strömungskanäle (4, 5) angeordnet ist.

2. Spritzschutz nach Anspruch 1, **dadurch gekennzeichnet, dass** das Schutzprofil (3) bezüglich seiner Profilbreite zwei einander gegenüberliegende freie Profilflanken (9, 10) aufweist, die sich unter Ausbildung der Strömungskanäle (4, 5) und der darin einmündenden Einströmöffnung (6) zum in der Profilmitte angeordneten Strömungsteiler (7) erstrecken.

3. Spritzschutz nach Anspruch 1 oder 2, **dadurch gekennzeichnet, dass** der Strömungsteiler (7) als ein dem Nassbereich (2) zugewandter, in Profillängsrichtung zwischen den Strömungskanälen (4, 5) verlaufender Strömungsleitkamm ausgebildet ist.

4. Spritzschutz nach einem der Ansprüche 1 bis 3, **dadurch gekennzeichnet, dass** der jeweilige Strömungskanal (4, 5) sich im Querschnitt von der Einströmöffnung (6) zu einem der Einströmöffnung (6) gegenüberliegenden Sammelbereich (11) hin verjüngt.

5. Spritzschutz nach Anspruch 4, **dadurch gekennzeichnet, dass** eine jeweilige Profilflanke (9, 10) unter Ausbildung des Sammelbereiches (11) gebogen ist.

6. Spritzschutz nach einem der Ansprüche 2 bis 5, **dadurch gekennzeichnet, dass** das freie Ende der jeweiligen Profilflanke im Bereich der Einströmöffnung (6) vom Strömungsteiler (7) weg zum jeweiligen Strömungskanal (4, 5) hin ausgebogen ist.

7. Spritzschutz nach einem der Ansprüche 2 bis 6, **dadurch gekennzeichnet, dass** das freie Ende der jeweiligen Profilflanke (9, 10) einen bezogen auf den durch die Profilflanke (9, 10) gebildeten Strömungskanal (4, 5) im Querschnitt konkaven Flankenabschnitt (12, 13) aufweist, an den in Richtung Profilmitte ein bezogen auf diesen Strömungskanal (4, 5) im Querschnitt konvexer Flankenabschnitt (14, 15) anschließt.

8. Spritzschutz nach einem der Ansprüche 1 bis 7, **dadurch gekennzeichnet, dass** der Strömungsteiler (7) einen Hohlquerschnitt unter Ausbildung einer Kabeldurchführung (8) aufweist.

9. Spritzschutz nach einem der Ansprüche 1 bis 8, **dadurch gekennzeichnet, dass** der jeweilige Strömungskanal (4, 5) in Profillängsrichtung an wenigstens einem Profilendabschnitt (17, 18) in eine Wasserableiteinrichtung (16) mündet.

10. Spritzschutz nach einem der Ansprüche 1 bis 9, **dadurch gekennzeichnet, dass** der Strömungsteiler (7) in einer Mittelebene verläuft, bezüglich der das Schutzprofil (3) symmetrisch ausgebildet ist.

11. Spritzschutz nach einem der Ansprüche 1 bis 10, **dadurch gekennzeichnet, dass** das in Profillängsrichtung bogenförmig verlaufende Schutzprofil (3) einen Bogenwinkel über 180° umspannt.

12. Fahrrad (19) mit einem Spritzschutz nach einem der vorangegangenen Ansprüche.
